# EUROPEAN PATENT SPECIFICATION

(11) **EP 2 105 520 B1**
(45) Date of publication and mention of the grant of the patent: **28.12.2011**
(21) Application number: 09004072.6
(22) Date of filing: 20.03.2009
(51) Int. Cl.: C25D 5/04, C25D 15/00, C25D 15/02

(54) **Coating method and electrolyzing apparatus used therefor**
Beschichtungsverfahren und dafür verwendete Elektrolysierungsvorrichtung
Procédé de revêtement et appareil d'électrolysation utilisé avec celui-ci

(30) Priority: 25.03.2008 JP 2008078832
(43) Date of publication of application: 30.09.2009
(73) Proprietor: Kabushiki Kaisha Toshiba, Minato-ku, Tokyo 105-8001 (JP)
(72) Inventor: Saito, Masahiro, Tokyo 105-8001 (JP); Yoshioka, Yomei, Tokyo 105-8001 (JP); Kitayama, Kazuhiro, Tokyo 105-8001 (JP); Okamoto, Hiroaki, Tokyo 105-8001 (JP); Sakai, Yoshiaki, Tokyo 105-8001 (JP)
(74) Representative: Schmidtchen, Jürgen Christian

(56) References cited:
- EP-A- 0 484 115
- WO-A-2004/001100
- US-A- 4 305 792
- US-A- 5 833 829

## Description

### BACKGROUND OF THE INVENTION

### Field of the Invention

The present invention relates to a method of coating a composite coating layer onto a surface of a heat resistant part which is used in a high-temperature oxidizing atmosphere or a corrosive atmosphere or the like and also relates to an electrolyzing apparatus used for the coating method. More particularly, relates to a coating method for the heat resistant parts constituting a gas turbine, a jet engine or the like and an electrolyzing apparatus used for performing the coating method.

### Description of Related Art

In recent years, a power generation using a gas turbine has been paid attention from a viewpoint of effectively utilizing an energy resource. In a power generating system using the gas turbine, a combustion gas discharged from a combustion chamber and having a high temperature and a high pressure is introduced into a turbine body. Then, the combustion gas rotates rotor vanes (moving blades) provided to a turbine shaft, so that a shaft of a generator directly connected to the turbine shaft is rotated to thereby generate electric power.

Generally, in a gas turbine generating system, higher heat efficiency can be obtained as the temperature of the combustion gas at an inlet of the gas turbine is increased, and therefore, stator vanes and rotor vanes of the gas turbine are exposed to high temperature and high pressure atmosphere, so that it has been required for these vanes to provide higher heat resisting property.

Further, when the combustion gas having a high temperature is utilized, corrosive substances such as sulfuric acid and marine salt or the like generated from a fuel are liable to be contained in the combustion gas, and accordingly, high-temperature corrosion and high-temperature oxidation would occur. Therefore, the gas turbine parts are required to have not only a heat resistance but also a corrosion resistance.

Conventionally, there have been proposed many techniques to form a corrosion resistant film (coated film layer) having high heat resistance and corrosion resistance onto a surface of a metal base member such as stator vane or rotor vane or the like of the gas turbine. For example, Japanese Patent Publication No. SHO 60-13056 (Patent Document 1) discloses a technique in which a CoCrAlY coating layer deposited by plasma spraying (flaming) method is formed onto a surface of an Ni-based alloy to thereby obtain a coated Ni-based alloy product having a predetermined thermal expansion coefficient. The coated Ni-based alloy product disclosed in the Patent Document 1 is excellent in oxidation resistance and corrosion resistance at a high temperature.

However, since the plasma spraying is a method in which material powder is heated and molten to obtain a high temperature, and the molten material is sprayed onto a base member or the like, there have been posed many inconveniences such that an entire base member is deformed due to the high temperature, structure of the base member causes breakage or deformation. When a heat treatment is conducted to repair the damaged structure, life duration of the base member is disadvantageously shortened, or a manufacturing cost is significantly increased. Furthermore, there has been also posed a problem such that the plasma spraying method requires much time to form the coating layer.

On the other hand, prior art has also proposed techniques to form the corrosion resistant film having high heat resistance and corrosion resistance by utilizing a method other than the plasma spraying method mentioned above. For example, United States Patent No.4789441 (Patent Document 2) discloses a technique in which the corrosion resistant film is formed by electroplating, and the coated base member has a coating layer comprising a matrix phase M1 containing CrAlY particles wherein M1 is at least one element selected from the group consisting of Ni, Co and Fe. The coated base member disclosed in the Patent Document 2 is excellent in oxidation resistance and corrosion resistance at a high temperature.

Since the coated base member disclosed in the Patent Document 2 is manufactured by using the electrolytic plating method, when the base member has a complicated shape like a gas turbine rotor vane or the like, there has been posed a problem such that it is difficult to form the coating layer having a uniform thickness onto a surface of the base member.

WO 2004/001100 A1 discloses a process for forming coatings or free-standing deposits of nanocrystalline metals, metal alloys or metal matrix composites, wherein the process employs drum plating for the continuous production of nanocrystalline foils or selective brush plating processes involving pulse electrodeposition.

EP 0 484 115 A1 relates to a method for applying an abrasive layer to a metallic substrate, wherein the abrasive layer comprises abrasive particles in a metal alloy matrix, comprising the steps of maintaining abrasive particles in contact with a substrate surface and depositing a first thin layer of metal onto the substrate surface, thereby adhering the abrasive particles to the substrate surface, applying a second metal containing fine prealloyed powders by co-electrodeposition over the abrasive particles and the first thin layer of metal, and thermally treating the abrasive-layered substrate to homogenize the first thin layer of metal and the second metal containing prealloyed powders to form a substantially homogeneous metal alloy matrix.

### SUMMARY OF THE INVENTION

The present invention was conceived in consideration of the circumstances encountered in the prior art mentioned above and an object of the present invention is to provide a coating method capable of forming a coating layer excellent in oxidation resistance and corrosion resistance at a high temperature without causing any deformation or structure change in a base member and capable of manufacturing the coating layer in a short manufacturing time through a simple manufacturing process, resulting in a low manufacturing cost and also provide an electrolysing apparatus used for performing the coating method.

The above and other objects can be achieved according to the present invention by providing, in one aspect, a coating method in which a composite coating layer is formed on a surface of an alloy base member by utilizing an electrolyzing apparatus provided with a rotary electrode devise which includes a cylindrical rotary electrode capable of rolling on a surface of the alloy base member, wherein the rotary electrode device includes a rotary drum unit including the cylindrical rotary electrode and side members for closing both end portions in an axial direction of the cylindrical rotary electrode, a supporting member for rotatably supporting the rotary drum unit, a drum operating member connected to the supporting member, and a nonwoven fabric layer covering the surface of the cylindrical rotary electrode, wherein
the rotary drum unit is formed with a hollow portion therein, the cylindrical rotary electrode is provided with a plurality of first liquid ejection holes that are communicated with the follow portion, and each of the supporting member and the drum operating member is formed with hollow portions that are connected to each other, and wherein the nonwoven fabric layer 31 is provided with a plurality of second ejection holes 35, which are formed so as to overlap with the first liquid ejection holes 25 at a wide range thereof, the coating method comprising the steps of:
preparing an electrolytic solution containing A ion wherein A is Co or Ni;
preparing a MCrAlY powder wherein M denotes at least one element selected from the group consisting of Ni and Co, and the MCrAlY powder contains at least Ni when A is Co or the MCrAlY powder contains at least Co when A is Ni;
preparing a dispersion liquid by dispersing the MCrAlY powder into the electrolytic solution;
immerging the cylindrical rotary electrode and the alloy base member into the dispersion liquid; and
electrolyzing the surface of the alloy base member while rolling the cylindrical rotary electrode covered with the nonwoven fabric layer on the surface of the alloy base member to thereby form a composite coating layer on the surface of the alloy base members.

In preferred embodiments, the composite coating layer may include a matrix phase composed of the A and the MCrAlY powder dispersed in the matrix phase.

The MCrAlY powder contained in the dispersion liquid may have a grain size exceeding 10 µ m and 30 µ m or less.

The dispersion liquid may contain the MCrAlY powder at a mixing rate of 10g/l to 30g/l.

It may be desired that the current density at the time of electrolyzing is set to 10A/dm² to 30A/dm².

The dispersion liquid may have a temperature set to 40°C to 60°C at the time of electrolyzing process.

It may be desired that the electrolytic solution of the dispersion liquid is a nickel sulfamate aqueous solution, and the MCrAlY powder is CoCrAlY powder, or the electrolytic solution of the dispersion liquid is a cobalt sulfamate aqueous solution, and the MCrAlY powder is NiCrAlY powder.

The alloy base member may be composed of super alloy containing at least one element selected from a group consisting of Ni, Cr and Fe as main component.

The coating method may further comprise the step of heating the alloy base member and the composite coating layer at temperature of 800°C to 1200°C for 60 - 300 minutes.

The alloy base member is a turbine blade.

In another aspect of the present invention, there is also provided an electrolyzing apparatus used for performing a coating method of claim 1, comprising: an electrolytic bath filled with dispersion liquid; a rotary electrode device in which a rotary drum unit having a cylindrical rotary electrode is immerged into the dispersion liquid; a robot arm having a top end portion attached to the rotary drum unit; a control unit for controlling a movement of the robot arm; a dispersion liquid supply pump connected to the rotary electrode device so as to eject the dispersion liquid from the rotary drum unit; and an agitator for agitating the dispersion liquid, wherein the rotary electrode device includes a rotary drum unit including the cylindrical rotary electrode and side members for closing both end portions in an axial direction of the cylindrical rotary electrode, a supporting member for rotatably supporting the rotary drum unit, a drum operating member connected to the supporting member, and a nonwoven fabric layer covering the surface of the cylindrical rotary electrode, wherein
the rotary drum unit is formed with a hollow portion therein, the cylindrical rotary electrode is provided with a plurality of first liquid ejection holes that are communicated with the follow portion, and each of the supporting member and the drum operating member is formed with hollow portions that are connected to each other, and wherein the nonwoven fabric layer 31 is provided with a plurality of second ejection holes 35, which are formed so as to overlap with the first liquid ejection holes (25) at a wide range thereof.

According to the coating method of the present invention, there can be formed a coating layer excellent in oxidation resistance and corrosion resistance at a high temperature without causing any deformation or structure change in the base member, and the coating layer can be manufactured in a short time through a simple manufacturing process resulting in a low manufacturing cost.

The nature and further characteristic features of the present invention will be made clearer from the following descriptions made with reference to the accompanying drawings.

### BRIEF DESCRIPTION OF THE DRAWIMGS

In the accompanying drawings:
Fig. 1 is a view showing an illustration of an overall structure of an electrolyzing device used in a coating method according to the present invention;
Fig. 2 is a perspective view showing a rotary electrode device constituting the electrolysing device;
Fig. 3 is a partial cross sectional view, in an enlarged scale, taken along the line III-III in Fig. 2;
Fig. 4 is a cross sectional view, in an enlarged scale, taken along the line IV-IV in Fig. 2;
Fig. 5 is an illustrated perspective view showing an outer configuration of an alloy base member according to one embodiment used in the present invention;
Fig. 6 is a cross sectional view, in an enlarged scale, taken along the line VI-VI shown in Fig. 5;
Fig. 7 is an illustrated perspective showing an outer configuration of an alloy base member (coating layer formed product) formed with a composite coating layer;
Fig. 8 is a cross sectional view, in an enlarged scale, taken along the line VIII-VIII shown in Fig. 7;
Fig. 9 is an illustrated sectional view, in an enlarged scale, of a portion IX shown in Fig. 8;
Fig. 10 is a cross sectional view, in an enlarged scale, taken along the line IV-IV in Fig. 2 concerning another rotary electrode device;
Fig. 11 is a view showing an illustration of an overall structure of another electrolyzing device used in a comparative coating method ;
Fig. 12 is a perspective view showing another rotary electrode device constituting the electrolyzing device of Fig. 11; and
Fig. 13 is a partial cross sectional view, in an enlarged scale, taken along the line XIII-XIII in Fig. 12.

### DESCRIPTION OF THE PREFERRED EMBODIMENT

Preferred embodiments of the present invention will be described hereunder with reference to the accompanying drawings, and it is first to be noted that the coating method according to the present invention is a method in which the alloy base member is immersed into a specified dispersion liquid, and an electrolyzing operation (hereinafter, referred to as "electrolyzation" or "electrolyzing") is performed by using a specified rotary electrode device to thereby form a specified composite coating layer onto a surface of the alloy base member.

### [First Embodiment]

Hereunder, a first embodiment of an electrolyzing device used in the present invention will be explained with reference to the accompanying drawings.

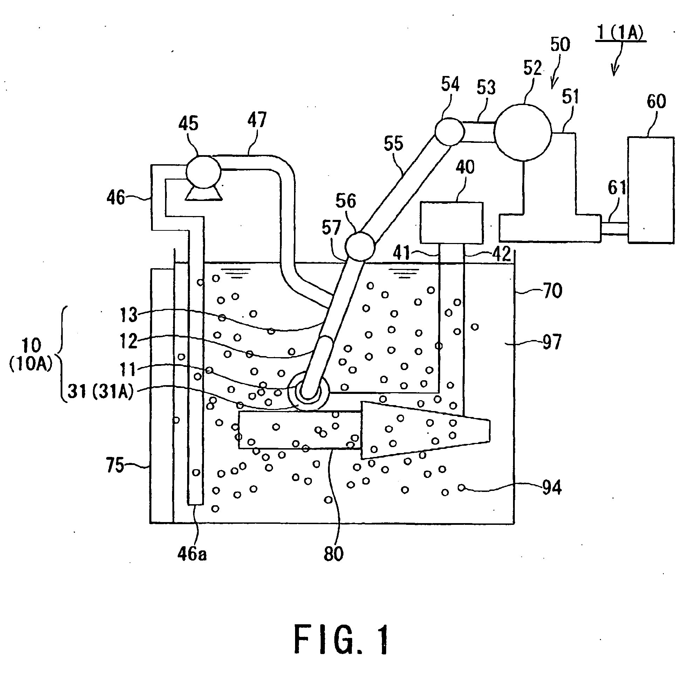

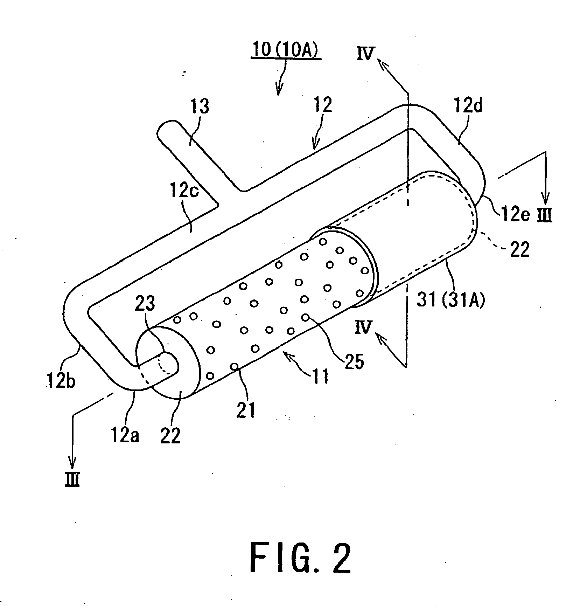

As shown in Figs. 1 and 2, an electrolyzing device 1 comprises: an electrolytic bath 70 filled with dispersion liquid 97; a rotary electrode device 10 in which a rotary drum unit 11 having a cylindrical rotary electrode 21 is immerged into the dispersion liquid 97; a robot arm 50 having a top end portion attached to the rotary drum unit 11 of the rotary electrode device 10 so that the rotary drum unit 11 is transferred in the dispersion liquid 97; a control unit 60 for controlling a movement of the robot arm 50; a dispersion liquid supply pump 45 connected to the rotary electrode device 10 so as to eject the dispersion liquid from the rotary drum unit 11; and an agitator 75 for agitating the dispersion liquid 97.

The above structural elements will be explained in detail hereunder, respectively.

The rotary electrode device 10 is provided with a cylindrical rotary electrode 21 mounted to the rotary drum unit 11. When DC voltage is applied to a portion between the cylindrical rotary electrode 21 and an alloy base member 80 such as turbine rotor vane or the like that are immersed in the dispersion liquid 97 stored in the electrolytic bath 70, a composite coating layer is formed on a surface of the alloy base member.

A DC power source 40 supplies DC current to the rotary electrode device 10 and the alloy base member 80 through conducting wires 41 and 42.

The dispersion liquid supply pump 45 supplies the dispersion liquid 97 to the rotary electrode device 10. A suction side hose 46 connected, at its one end, to a suction port of the dispersion liquid supply pump 45 is immerged into the dispersion liquid 97 in the electrolytic bath 70.

On the other hand, a discharge side hose 47 connected, at its one end, to a discharge port of the dispersion liquid supply pump 45 is connected to a hollow portion of the drum operating member 13 of the rotary electrode device 10, so that the dispersion liquid 97 is supplied to the drum operating member 13 of the rotary electrode device 10. The dispersion liquid 97 in the drum operating member 13 is supplied to a hollow portion, not shown, of the rotary drum unit 11 through a hollow portion, not shown, of the supporting member 12.

The robot arm 50 is composed of: a base portion 51; a base portion arm 53; an intermediate arm 55; a tip end arm 57; an articulated (joint) portion 52 for connecting the base portion 51 and the base portion arm 53; an articulated (joint) portion 54 for connecting the base portion arm 53 and the intermediate arm 55; and an articulated (joint) portion 56 for connecting the intermediate arm 55 and the tip end arm 57.

The tip end arm 57 is connected to the drum operating member 13 of the rotary electrode device 10 so as to move and transfer the rotary electrode device 10.

The control unit 60 is electrically connected to the robot arm 50 to control the movement of the robot arm 50on the basis of three-dimensional shape data of the alloy base member, and the three-dimensional shape data has been inputted in advance in the control unit 60.

When the rotary drum unit 11 of the rotary electrode device 10 is moved along a surface shape of the alloy base member 80 by operating the control unit 60, a composite coating layer having a uniform thickness is formed on the surface of the alloy base member 80.

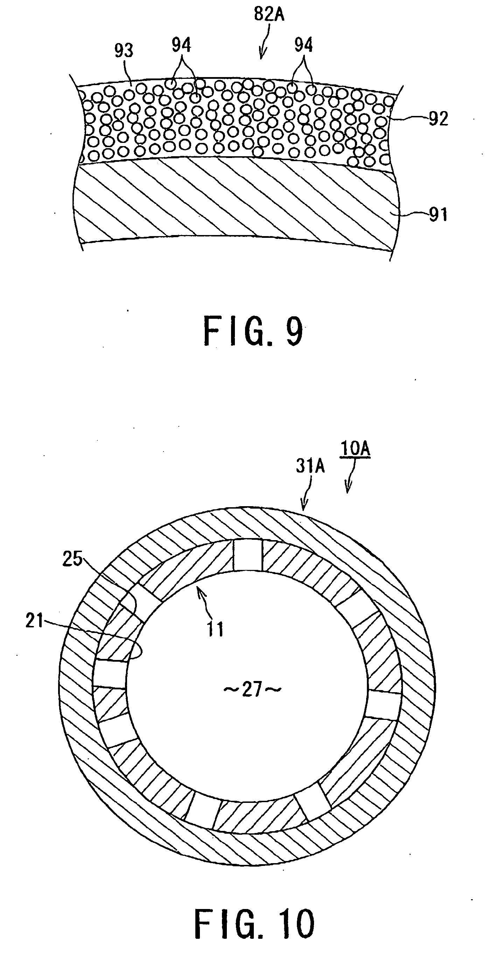

The electrolytic bath 70 is configured such that the rotary electrode device 10 and the alloy base member 80 can be immerged into the dispersion liquid 97. An agitator 75 for agitating the dispersion liquid 97 is provided in the electrolytic bath 70 and MCrAlY powder 94 (refer to Fig.9) can be dispersed into the dispersion liquid 97.

### (Rotary Electrode Device 10)

Next, the rotary electrode device will be explained with reference to the Figs. 2 to 4 of the accompanying drawings.

As shown in Fig. 2, the rotary electrode device 10 comprises: a rotary drum unit 11 including a cylindrical rotary electrode 21; a supporting member 12 supporting side members 22, 22 disposed both side portions of the cylindrical rotary electrode 21, the side members being provided with axial bores; a drum operating member 13 connected to the supporting member 12; and a nonwoven fabric layer 31 covering the surface of the cylindrical rotary electrode 21.

### (Rotary Drum Unit 11)

As mentioned above, the rotary drum unit 11 comprises the cylindrical rotary electrode 21 and circular-disc-shaped side members 22, 22 for closing both end portions, in an axial direction, of the cylindrical rotary electrode 21 so as to provide a columnar shape of the rotary drum unit 11. Center portions of the side members 22, 22 are provided with axial bores 23, 23 into which the support member 12 can be inserted.

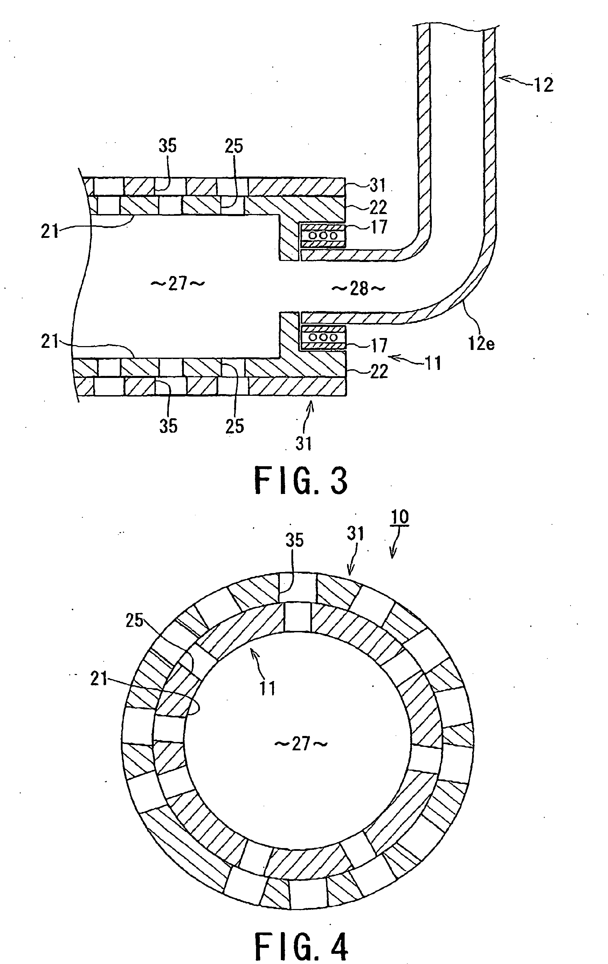

As shown in Figs. 3 and 4, the cylindrical rotary electrode 21 of the rotary drum unit 11 has an inner hollow portion 27, and the rotary drum unit 11 is formed to provide a cylindrical shape.

As the cylindrical rotary electrode 21, the following composite electrode may be also used. For example, a composite electrode which is manufactured by plating gold and platinum in turn onto a surface of a lead electrode body or a lead base member, or a composite electrode which is manufactured by plating platinum onto a surface of a titanium electrode or a titanium base member may be used. Among these composite electrodes, the composite electrode which is manufactured by plating gold and platinum in turn onto the surface of the lead base member and the composite electrode which is manufactured by plating platinum onto the surface of the titanium base member have a high corrosion resistance, thus being preferable.

The cylindrical rotary electrode 21 is provided with a lot of first liquid ejection holes 25. The first liquid ejection holes 25 have a function of blowing out the dispersion liquid 97 in the hollow portion 27 toward the outside of the cylindrical rotary electrode 21 by discharge pressure of the dispersion liquid supply pump 45.

It is preferable that each the first liquid ejection holes 25 normally has a diameter within a range of 0.1 mm to 0.5 mm, more preferably 0.2 mm to 0.4mm. When the diameter of the first liquid ejection holes 25 is set within this range, the MCrAlY powder 94 contained in the dispersion liquid 97 can smoothly pass through the first liquid ejection holes 25, thus being preferable.

### (Support Member 12)

As shown in Fig. 2, the support member 12 includes: a rod-shaped base portion 12c; intermediate portions 12b, 12d formed so as to be bent at right angle from both ends of the base portion 12c; tip end portions 12a, 12e formed so as to be bent at right angle from ends of the intermediate portions 12b, 12d, so that the support member 12 provides an outer configuration of C-shape.

As shown in Fig. 3, the tip end portions 12a, 12e of the support member 12 are inserted into the axial bores (holes) 23, 23 of the rotary drum unit 11 1 through a ball bearing 17, so that the rotary drum unit 11 is rotatably supported by the support member 12.

The support member 12 is formed with a hollow portion 28 therein. The end portions of the tip portions 12a, 12e of the support member 12 are opened, and the hollow portion 28 is communicated with the hollow portion 27 of the rotary drum unit 11.

### (Drum Operating Member 13)

As shown in Fig. 2, the drum operating member 13 is connected to a base portion 12c of the support member 12. The drum operating member 13 is formed with a hollow portion, not shown, therein, and this hollow portion is communicated with the hollow portion 28 of the support member 12.

### (Nonwoven Fabric Layer 31)

As shown in Fig. 2, the nonwoven fabric layer 31 covers a surface of the cylindrical rotary electrode 21. As a material constituting the nonwoven fabric layer 31, a nonwoven fabric having an opening through which the electrolytic solution in the dispersion liquid can pass and the MCrAlY powder contained in the dispersion liquid 97 can be trapped is effectively used.

The nonwoven fabric layer 31 has a function of insulating an electrical conduction between the alloy base member and the cylindrical rotary electrode 21. Therefore, as a material for constituting the nonwoven fabric layer 31, a material having an electrically insulating property may be preferably used. Examples of the material constituting the nonwoven fabric layer 31 may include, for example, nonwoven fabric composed of synthetic fiber, glass fiber or the like.

The nonwoven fabric layer 31 normally has a thickness within a range of 500 µm to 5000 µm. When the thickness of the nonwoven fabric layer 31 is set within this range, a preferred passing-through property of the electrolytic solution and the MCrAlY powder 94 will be provided while maintaining good insulating performance.

As shown in Figs. 3 and 4, the nonwoven fabric layer 31 is formed with a lot of second ejection holes 35. As explained hereinbefore, the second ejection holes 35 means a hole having a diameter through which the MCrAlY powder 94 contained in the dispersion liquid 97 can pass.

Namely, the nonwoven fabric layer 31 is configured such that an entire dispersion liquid 97 containing the MCrAlY powder 94 can pass through at the second ejection holes 35 of the nonwoven fabric layer 31, while the MCrAlY powder 94 contained in the dispersion liquid 97 cannot pass through a portion other than the second ejection holes 35 of the nonwoven fabric layer 31.

It is preferable that the second ejection hole 35 has a diameter within a range of 0.1 mm to 0.5 mm, more preferably 0.2 mm to 0.4 mm. When the diameter of the second ejection hole 35 is set within this range, the MCrAlY powder 94 can smoothly pass through the second ejection holes 35, thus being preferable.

Further, the second ejection holes 35 of the nonwoven fabric layer 31 are formed so as to overlap with the first ejection holes 25 of the cylindrical rotary electrode 21 at a wide range thereof.

The coating method according to the present invention is a method in which the alloy base member 80 is immersed into a specified dispersion liquid 97, and an electrolyzing operation is performed by using a specified electrode device 1 including the rotary electrode device 10 of the structure mentioned above to thereby form a specified composite coating layer onto a surface of the alloy base member 80.

### (Alloy Base Member 80)

It is preferable that the alloy base member 80 is composed of super alloy containing at least one element selected from a group consisting or Ni, Co and Fe as main component. In this regard, the super alloy means an alloy having at least heat resistance, and having oxidation resistance and corrosion resistance at high temperature.

In this connection, the term "main component" means a component having the largest molar quantity of the element selected from Ni, Co and Fe among total molar quantity of metal elements constituting the alloy base member 80. For example, in a case where the alloy base member 80 is composed of Ni, Co, Fe and other metal elements, a total molar quantity of Ni and Co is largest among the total molar quantity of the metal elements constituting the alloy base member 80.

As a composition of the super alloy constituting the alloy base member 80, for example, an alloy having a composition of 60wt%Ni-16wt%Cr-8.5wt%Co-1.7wt%Mo is preferably usable.

As far as the alloy base member 80 is composed of the super alloy having the above composition, a shape of the alloy base member 80 is not particularly limited. However, the present invention can effectively applied to a base member having a complicated surface shape. Examples of the base members may include gas turbine parts such as rotor vane and stator vane of turbine blade, shroud, combustor or the like.

In a case where the alloy base member 80 has the complicated surface shape, it is difficult to form a composite coating layer having a uniform thickness by using conventional dispersion plating methods. However, according to the coating method of the present invention, it is easy to form a composite coating layer having a uniform thickness by using the rotary electrode device 10, thus providing significant effects according to the present invention.

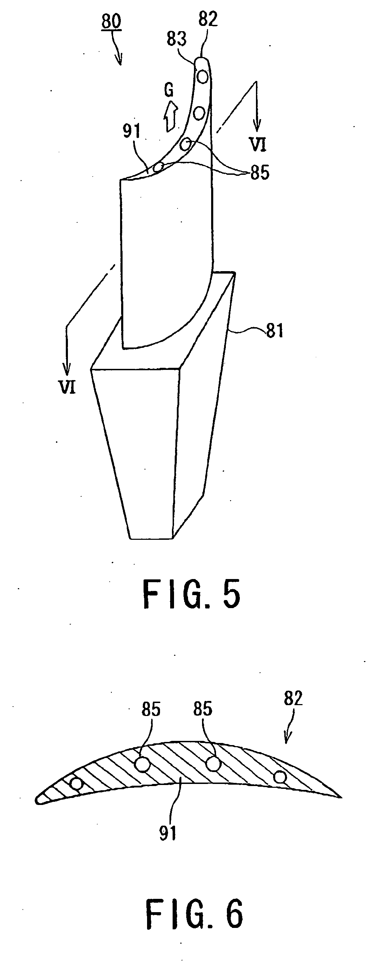

The alloy base member 80 will be explained with reference to the accompanying drawings. Fig. 5 is a perspective view schematically showing the outer configuration of the rotor vane as the alloy base member 80 of a turbine blade. Fig. 6 is a cross sectional view showing a cross section taken along the line VI-VI shown in Fig. 5.

As shown in Fig. 5, the rotor vane of the turbine blade (alloy base member) 80 includes a base portion 81 and a vane portion 82 upwardly extending from the base portion 81.

The vane portion 82 is provided with air-cooling holes 85 penetrating through the vane portion 82 in a longitudinal direction, and one end of the air-cooling hole 85 is opened at a tip end portion 83 thereof. Another end of the air-cooling hole 85 is communicated with the base portion 81, and cooling air is supplied to the air-cooling hole 85 from an air-supply device, not shown, provided on the side of the base portion 81. The cooling air flows in the air-cooling hole 85 and is then discharged to a direction shown by an arrow G.

As shown in Fig. 6, the vane portion 82 is composed of super alloy and has a sublunate shaped cross sectional surface. The air-cooling holes 85 are formed in the sublunate-shaped alloy member phase 91.

Next, a dispersion liquid used in the present invention will be explained. The dispersion liquid used in the present invention is prepared by dispersing the MCrAlY powder into a specified electrolytic solution.

### (Electrolytic Solution)

The electrolytic solution used in the present invention contains an ion of specified metal A. As the metal A used in the present invention, Co or Ni is suitably used. Normally, the electrolytic solution contains only Co ion or Ni ion as metal A ion. Concrete examples of the electrolytic solution may include nickel sulfamate aqueous solution, cobalt sulfamate aqueous solution or the like.

When an electroplating is performed using the rotary drum unit 11 of the rotary electrode device 10 as a positive electrode while the alloy base member 80 is used as a negative electrode, the metal A ion forms a matrix phase of metal A onto a surface of the alloy base member 80. The matrix phase of metal A is substantially composed of either Co or Ni.

### (MCrAlY powder)

The MCrAlY powder used in the present invention may be an alloy powder composed of metal M, Cr, Al and Y. A composition ratio of metal M, Cr, Al and Y is not particularly limited in the present invention.

When the dispersion plating is performed, the MCrAlY powder is dispersed and entrained in the matrix of metal A formed on the surface of the alloy base member 80, whereby the matrix of metal A and the MCrAlY powder would form a composite coating layer.

As the metal M constituting the MCrAlY powder, at least one metal element selected from the group consisting of Ni and Co can be used. The metal M of the MCrAlY powder contains at least Ni when metal A ion in the electrolytic solution is Co. Further, the MCrAlY powder contains at least Co when metal A ion in the electrolytic solution is Ni.

For example, when the electrolytic solution contains Co ion, NiCrAlY powder or the like is selected as the MCrAlY powder.

Further, when the electrolytic solution contains Ni ion, CoCrAlY powder or the like may be selected as the MCrAlY powder.

When the MCrAlY powder is selected in accordance with kind of the metal A ion contained in the electrolytic solution, an intermetallic compound of Ni and Co is liable to be formed at boundary between the matrix phase of metal A and the MCrAlY powder in the composite coating layer, so that a bonding property (adhesion property) between the matrix phase and the MCrAlY powder can be easily increased, thus being preferable. The intermetallic compound of Ni and Co is formed, for example, by conducting a heat treatment to the composite coating layer.

Further, it is preferable that the MCrAlY powder has a grain size exceeding 10 µ m and 30 µ m or less, more preferably has a grain size exceeding 10 µ m and 25 µ m or less. When the grain size of the MCrAlY powder is set within the above range and a composite coating layer having a sufficient thickness for protecting the surface of the alloy base member 80, it becomes possible to form the composite coating layer having a small porosity in a short time, thus being effective and advantageous.

In this connection, "porosity" is an index showing a ratio of void volume with respect to an entire volume of the composite coating layer. The porosity can be calculated, for example, through the following method. Namely, a photograph of the cross sectional structure is taken, then a total void area is measured on the photograph. Finally, the porosity can be calculated as a ratio of void area with respect to an entire cross sectional area of the composite coating layer.

When the grain size of the MCrAlY powder is 10 µ m or less, there may be posed fears such that it takes a long time to prepare a composite coating layer having a sufficient thickness for effectively protecting the surface of the alloy base member 80, wettability is deteriorated, and the MCrAlY powder is easily aggregated to each other to thereby increase the porosity of the composite coating layer.

On the other hand, when the grain size of the MCrAlY powder exceeds 30 µ m and the composite coating layer having a sufficient thickness for effectively protecting the surface of the alloy base member 80 is formed, there may be posed a fear that the porosity of the composite coating layer is disadvantageously increased.

Furthermore, when a classification using a sieve having an opening corresponding to an upper limit of the grain size range and another sieve having an opening corresponding to a lower limit of the grain size range is performed, or when a classification using a cyclone-type classifier is performed, the grain size of the MCrAlY powder can be set within the above range.

### (Dispersion Liquid)

The dispersion liquid used in the present invention can be obtained by dispersing the above MCrAlY powder into the electrolytic solution. As a method of dispersing the MCrAlY powder into the electrolytic solution, there may be used a method in which the MCrAlY powder is added into the electrolytic solution, which is then agitated.

Further, it is preferable that the dispersion liquid normally contains the above-mentioned MCrAlY powder at a mixing rate of 10g/l to 30g/l, more preferably 10g/l to 25g/l. When the content of the MCrAlY powder in the dispersion liquid is set to within the above range and a composite coating layer having a sufficient thickness for protecting the surface of the alloy base member 80 is formed, a composite coating layer having a small porosity can be manufactured in a short processing time, thus being advantageous.

In contrast, when the content of the MCrAlY powder in the dispersion liquid is less than 10g/l, there may cause a fear that a time required for forming the composite coating layer having a sufficient thickness for protecting the surface of the alloy base member 80 is disadvantageously prolonged.

On the other hand, when the content of the MCrAlY powder in the dispersion liquid exceeds 30g/l and a composite coating layer having a sufficient thickness for protecting the surface of the alloy base member 80 is formed, there may cause a fear that the porosity of the composite coating layer is increased.

Furthermore, it is preferable that a temperature of the dispersion liquid at the time of electrolyzing is set to 40°C to 60°C, preferably 45°C to 55 °C . When the temperature of the dispersion liquid at the time of electrolyzing is set within the above range, a precipitation of metal ion contained in the electrolytic solution is effectively activated, so that the coating layer can be formed in a short time. Furthermore, the porosity of the composite coating layer formed on surface of the alloy base member can be decreased, thus being very effective.

### (Electrolyzation)

In the coating method according to the present invention, electrolyzing operation is performed in the dispersion liquid by using the electrode device 1 containing the above rotary electrode device 10, whereby a specified composite coating layer is formed onto the surface of the alloy base member 80.

The electrode device 1 will operate or function as follows.

### (Roughening Treatment and Scrubbing (Washing) Treatment)

At first, as occasion demands, the alloy base member 80 is subjected to a roughening treatment such as blasting treatment or the like, or washing treatment such as acid pickling or alkaline washing. When the roughening treatment and the washing treatment are performed, adhesion property (close-contacting property) of the composite coating layer with respect to the alloy base member 80 is enhanced, thus being preferable.

### (Agitating Process for Dispersion Liquid)

On the other hand, as shown in Fig. 1, after the dispersion liquid 97 is retained in the electrolytic bath 70 of the electrode device 1, the alloy base member 80 is immersed into the dispersion liquid 97. Thereafter, the dispersion liquid 97 is kept to being agitated by the agitator 75.

By agitating the dispersion liquid 97, it becomes possible to perform the dispersion plating in which the MCrAlY powder 94 contained in the dispersion liquid 97 is uniformly involved into the composite coating layer. In this regard, "dispersion plating" means a plating method in which the MCrAlY powder 94 contained in the dispersion liquid 97 is involved into the matrix phase composed of metal A when the matrix phase composed of metal A is formed by reducing (deoxidizing) A ion contained in the electrolytic solution in the dispersion liquid 97.

Further, at the time of electrolyzation, it is preferable that the alloy base member 80 immersed into the dispersion liquid 97 is kept to have substantially the same temperature as that of the dispersion liquid 97. When the alloy base member 80 and the dispersion liquid 97 have substantially the same temperature, a temperature-lowering or change of the electrolytic solution can be prevented, so that it becomes possible to form a uniform coating layer having high quality onto the alloy base member 80 throughout the formation of an initial coating layer to a final coating layer.

### (Process for supplying Dispersion Liquid)

Next, as a process for supplying dispersion liquid, a dispersion liquid supply pump 45 is driven so as to supply the dispersion liquid 97 retained in the electrolytic bath 97 to the hollow portion 27 of the rotary drum unit 11 provided to the rotary electrode device 10.

The dispersion liquid 97 supplied to the hollow portion 27 of rotary drum unit 11 passes through the first liquid ejection holes 25 of the rotary drum unit 11 by the action of the discharge pressure of the dispersion liquid supply pump 45. Then, the dispersion liquid 97 is spouted out and ejected through the second liquid ejection holes 35 of the nonwoven fabric layer 31.

### (Dispersion Plating Process)

Further, a dispersion plating process is performed. That is, under a condition that the cylindrical rotary electrode 21 covered with the nonwoven fabric layer 31 is rolled on the surface of the alloy base member 80, an electrolyzing operation is performed at a constant current by using direct current power source 40, thereby to conduct the dispersion plating.

The electrolyzing operation is performed by using the cylindrical rotary electrode 21 of the rotary electrode device as a positive electrode while using the alloy base member 80 as a negative electrode.

In the dispersion plating operation, the dispersion liquid 97 existing at a portion between the nonwoven fabric layer 31 of the rotary electrode device 10 and the alloy base member 80, and the dispersion liquid 97 spouted out from the second ejection hole 35 of the nonwoven fabric layer 31, are used as supply source of A ion and the MCrAlY powder 94.

Due to above dispersion plating operation, a composite coating layer 92 is formed onto the surface of the alloy base member 80 to thereby manufacture a coating layer formed product 80A which includes the alloy base member 80 and the composite coating layer 92.

The rotary electrode device 10 having the cylindrical rotary electrode 21 is configured such that the cylindrical rotary electrode 21 rolls on the surface of the alloy base member 80 by moving, in forward/rearward direction and lateral direction of the drum operating member 13 which is driven by the robot arm 50 connected to the drum operating member 13.

The movement of the robot arm 50 is controlled by the control unit 60 on the basis of three-dimensional shape data of the alloy base member 80 such as rotor vane of the turbine blade or the like, the three-dimensional shape data having been inputted in advance in the control unit 60.

It is preferable that the current density at the time of electrolyzing is set within a range of 10A/dm² to 30A/dm², more preferably within a range of 10A/dm² to 25A/dm². In the case when the current density at the time of electrolyzing is set within the above range, if a composite coating layer has a sufficient thickness for protecting the surface of the alloy base member 80, it becomes possible to form the composite coating layer having a small porosity in a short time, thus being effective and advantageous.

When the current density at the time of electrolyzing is less than 10A/dm², there may cause a fear that it takes a long time to form a composite coating layer having a sufficient thickness for effectively protecting the surface of the alloy base member 80.

On the other hand, when the current density at the time of electrolyzing exceeds 30A/dm² and the composite coating layer having a sufficient thickness for effectively protecting the surface of the alloy base member 80 is formed, there may also cause a fear that the porosity of the composite coating layer is disadvantageously increased.

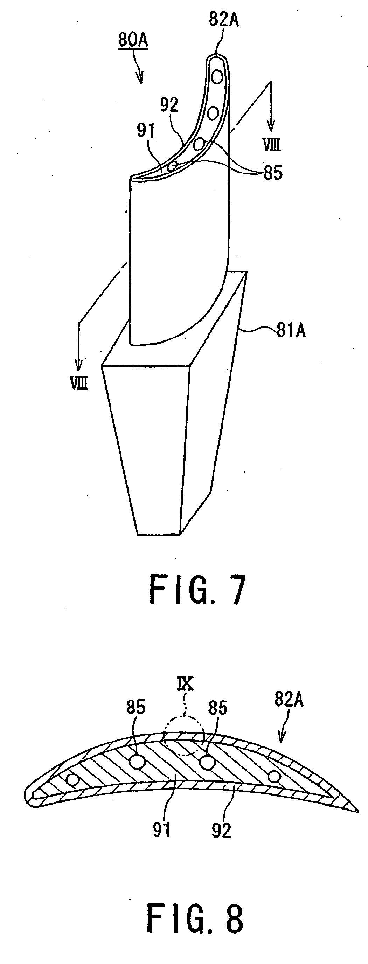

The coating-layer formed product 80A will be explained hereunder with reference to the accompanying drawings. Fig. 7 is a perspective view schematically showing an outer configuration of the coating-layer formed product 80A formed with a composite coating layer. Fig. 8 is a cross sectional view taken along the line VIII-VIII shown in Fig. 7.

As shown in Fig. 7, the rotor vane of the turbine blade (coating layer formed product) 80A formed with a composite coating layer on the surface of the alloy base member 80 is provided with a base portion 81A and a vane portion 82A upwardly extending from the base portion 81A.

The base portion 81A is formed in such a manner that the composite coating layer 92 is formed on an entire surface of the base portion 81 of the alloy base member 80 shown in Fig. 5 through the dispersion plating process. The vane portion 82A is formed in such a manner that the composite coating layer 92 is formed on a surface other than the tip end portion 83 among the surface of the vane portion 82.

As shown in Fig. 8, the vane portion 82A has a sublunate (crescent) shaped alloy member phase 91 on which a composite coating layer 92 is formed. Since an electrical current hardly conduct at an inner wall of the air-cooling holes 85 formed in the alloy base material phase 91, the composite coating layer 92 is not formed under a normal condition. However, the composite coating layer 92 may be also formed to the inner wall of the air-cooling holes 85.

The composite coating layer 92 will be further explained with reference to the accompanying drawings. Fig. 9 is an enlarged cross sectional view partially showing a cross section of a portion IX shown in Fig. 8.

As shown in Fig. 9, the composite coating layer 92 formed on the surface of the alloy base member phase 91 is configured so as to uniformly disperse the McrAlY powder 94 in the matrix phase 93 composed of metal A.

As occasion demands, a heat treatment may be conducted to the rotor vane (coating layer formed product) 80A of the turbine blade which is formed with the composite coating layer 92. Conditions of the heat treatment may vary in accordance with kinds of the super alloy constituting the base members. The heat treatment is preferably conducted under a temperature condition of solution treatment or aging treatment for the super alloy. The heat treatment may be conducted, for example, at a temperature of 800°C to 1200°C for 60 to 300 minutes.

When the above heat treatment is conducted, the matrix phase 93 composed of metal A and the MCrAlY powder 94 in the composite coating layer 92 cause an alloying reaction, thus forming an intermetallic compound, thus being preferable.

When the metal A and M component of the MCrAlY powder 94 are mutually diffused.to thereby generate the intermetallic compounds such as Ni-Al, Co-Al, a bonding strength between the matrix phase 93 composed of metal A and the MCrAlY powder 94 is increased.

Further, when M component of the MCrAlY powder 94 and Ni, Co, Cr component mutually cause elemental migrations to thereby generate the intermetallic compounds, a bonding strength between the composite coating layer 92 and the alloy base member 80 is also increased.

According to the coating method using the electrolyzing device 1, the movement of the rotary electrode device 10 is controlled by the robot arm 50 at the time of plating operation, the composite coating layer 92 having a uniform thickness and small amount of void can be formed onto the surface of the alloy base member 80.

### [First comparative example]

Next, a first comparative example of an electrolyzing device 1A will be explained with reference to the accompanying drawings.

The first comparative example of the electrolyzing device 1A is configured such that a rotary electrode device 10A is used in place of the rotary electrode device 10 shown in the electrolyzing device 1 according to the first embodiment, and a filter, not shown, for trapping the MCrAlY powder 94 is provided to a suction port 46a of the suction side hose 46.

Further, the rotary electrode device 10A has a structure in which a nonwoven fabric layer 31A is used in place of the nonwoven fabric layer 31 used in the rotary electrode device 10 explained hereinbefore in connection with the first embodiment. The rotary electrode device 10A and the rotary electrode device 10 have substantially the same structure except a difference between the nonwoven fabric layer 31 and the nonwoven fabric layer 31A. Therefore, the same reference numerals are used to denote the same elements, members or parts, and the explanations for the structure and operation of the same elements or the like are omitted or simplified herein.

Outer configuration of the electrolyzing device 1A is the same as that of the electrolyzing device 1 and has substantially the same outer configuration. In addition, an outer configuration of the rotary electrode device 10A also has substantially the same outer configuration as that of the rotary electrode device 10 shown in Fig. 2.

The rotary electrode device 10A is configured such that the nonwoven fabric layer 31A shown in Fig. 10 is used in place of the nonwoven fabric layer 31 in the rotary electrode device 10 shown in Figs. 1 and 2 as mentioned above.

Fig. 10 is a cross sectional view taken along the line IV-IV shown in Fig. 2 showing the rotary electrode device 10A.

As shown in Fig. 10, unlike the nonwoven fabric layer 31, the nonwoven fabric layer 31A is not provided with the second liquid ejection holes 35. Therefore, the nonwoven fabric layer 31A is configured so that only the electrolytic solution contained in the dispersion liquid 97 can pass through the nonwoven fabric layer 31A, while the MCrAlY powder 94 cannot pass through the nonwoven fabric layer 31A.

A filter, not shown, for trapping the MCrAlY powder 94 is provided at the suction port 46a of the suction side hose 46 in the electrolyzing device 1A. As the filter for trapping the MCrAlY powder 94, a nonwoven fabric composed of the same material as that of the nonwoven fabric layer 31A is used, for example. Due to the above structure, the dispersion liquid supply pump 45 supplies only the electrolytic solution of the rotary electrode device 10A.

Next, the electrolyzing device 1A will function in the manner described hereunder.

The function of the electrolyzing device 1A is substantially the same as that of the electrolyzing device 1 except that supplying process for supplying the electrolytic solution in place of dispersion liquid is performed, and a dispersion plating process including a different content is performed. Therefore, only the supplying process for supplying the electrolytic solution and the dispersion plating process will be explained and explanations of the other processes are omitted hereunder.

### (Process of Supplying Electrolytic Solution)

In the coating method using the electrolyzing device 1A, the process of supplying the electrolytic solution is performed after completion of an agitating process for agitating the dispersion liquid. The process of supplying the electrolytic solution is performed in a manner of driving the dispersion liquid supplying pump 45 provided with the filter for trapping the MCrAlY powder 94 to the suction port 46a of the suction side hose 46, and only the electrolytic solution contained in the dispersion liquid 97 retained in the electrolyzing bath 70 is supplied to the hollow portion 27 of the rotary drum unit 11 of the rotary electrode device 10A.

The electrolytic solution supplied to the hollow portion 27 of the rotary drum unit 11 passes through the first liquid ejection hole 25 of the rotary drum unit 11 by the action of a discharge pressure of the dispersion liquid supply pump 45, and then, the electrolytic solution is leached out from the nonwoven fabric layer 31A.

### (Dispersion Plating Process)

After the completion of the electrolytic solution supplying process, there is performed the dispersion plating process in which the cylindrical rotary electrode 21 covered with the nonwoven fabric layer 31A is rolled on a surface of the alloy base member 80, and an electrolyzation is performed at a constant current by using a direct current power source 40, thereby conducting the dispersion plating on the surface of the alloy base member 80.

In this connection, the electrolyzation is performed under the condition that the cylindrical rotary electrode 21 of the rotary electrode device 10A is used as a positive electrode while the alloy base member 80 is used as a negative electrode. In the dispersion plating operation, i) the dispersion liquid 97 existing at a portion between the nonwoven fabric layer 31A of the rotary electrode device 10A and the alloy base member 80; and ii) the electrolytic solution leached out from an entire nonwoven fabric layer 31A; are used as a supplying source of the A ion and the MCrAlY powder 94.

Due to the above dispersion plating, the composite coating layer 92 is formed on the surface of the alloy base member 80 so as to manufacture a coating-layer formed product 80A composed of the alloy base member 80 and the composite coating layer 92. The current density applied during the electrolyzing operation is the same as that of the case where the electrolyzing device of the first embodiment is used for the electrolyzing operation.

According to the coating method using the electrolyzing device 1A, the movement of the rotary electrode device 10A is controlled by the robot arm 50 during the plating operation, and a composite coating layer 92 having a uniform thickness and small amount of void can be formed onto the surface of the alloy base member 80.

Further, according to the coating method using the electrolyzing device 1A, since it is not necessary to perforate holes (ejection holes) to the nonwoven fabric layer 31A, lowering a manufacturing cost of the rotary electrode device 10A.

In addition, according to the coating method using the electrolyzing device 1A, the MCrAlY powder 94 would not be clogged at portions such as inside of the hollow portion 27 of the rotary drum unit 11 and the first liquid ejection holes 25. Therefore, the maintenance property of the electrolyzing device 1A is more improved than that of the electrolyzing device 1 of the first embodiment.

### [Second comparative example]

Next, a second comparative example of an electrolyzing device will be explained hereunder with reference to the accompanying drawings.

In the second comparative example of the electrolyzing device 1B, a rotary electrode device 10B is used in place of the rotary electrode device 10 in the electrolyzing device 1 according to the first embodiment, and the dispersion liquid supply pump 45 is not provided.

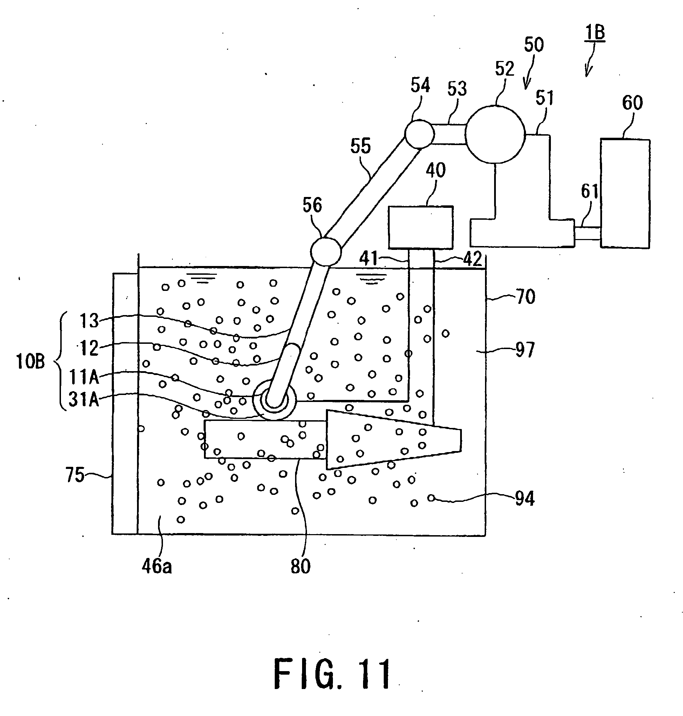

Further, the rotary electrode device 10B is configured such that a rotary drum unit 11A shown in Fig. 11 is used in place of the rotary drum unit 11 and a nonwoven fabric layer 31A adopted in the second embodiment is used in place of the nonwoven fabric layer 31 used in the rotary electrode device 10.

The rotary electrode device 10B and the rotary electrode device 10 have substantially the same structure except a difference between the rotary drum unit 11 and the rotary drum unit 11A and a difference between the nonwoven fabric layer 31 and the nonwowen fabric layer 31A. Therefore, the same reference numerals are used to denote the same elements, members or parts, and the explanations for the structure and operation of the same elements or the like are omitted or simplified herein.

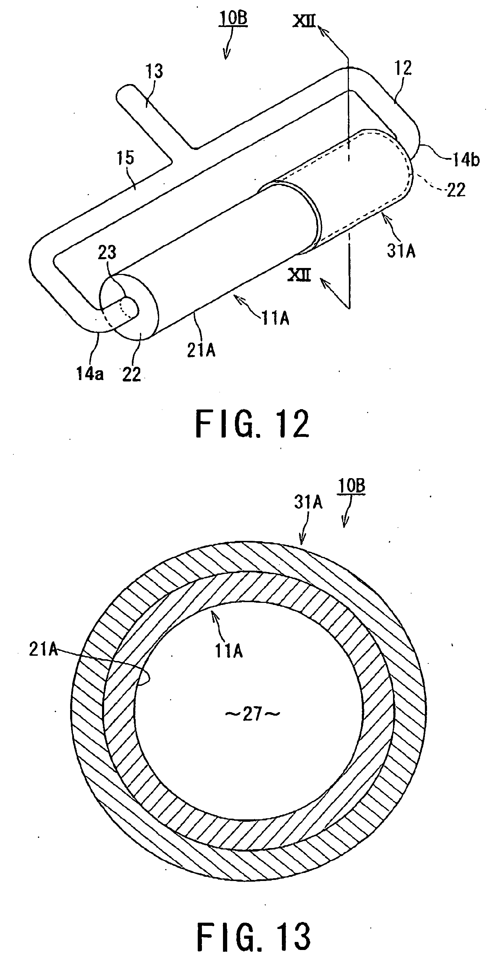

Fig. 1 is a view showing an overall structure of an electrolyzing device 1B. Fig. 12 is a perspective view showing a rotary electrode device 10B. Fig. 13 is a cross sectional view taken along the line XIII-XIII shown in Fig. 12.

As shown in Fig. 11, the electrolyzing device 1B comprises a rotary electrode device 10B, a direct current power source 40, a robot arm 50, a control unit 60, an electrolyzing bath 70, and an agitator 75.

As shown in Fig. 12, the rotary electrode device 10B comprises: a rotary drum unit 11A including a cylindrical rotary electrode 21A; a supporting member 12 for rotatably supporting side members 22, 22 of the rotary drum unit 11A; a drum operating member 13 connected to the supporting member 12; and the nonwoven fabric layer 31A covering the surface of the cylindrical rotary electrode 21A. The side members 22, 22 is for closing both end portions in an axial direction of the cylindrical rotary electrode 21A.

The rotary electrode device 10B does not include the dispersion liquid supply pump 45, the suction side hose 46, and the discharge side hose 47 that are used in the first embodiment shown in Fig. 1. Therefore, the discharge side hose 47 is not connected to the drum operating member 13.

As shown in Figs. 12 and 13 , the cylindrical rotary electrode 21A of the rotary drum unit 11A is not provided with the liquid ejection holes 25, so that the hollow portion 27 is not communicated with an outside of the cylindrical rotary electrode 21A. Therefore, the dispersion liquid 97 or the electrolytic solution is not ejected from the surface of the cylindrical rotary electrode 21A.

Further, the hollow portion 27 is communicated with the support member 12 and the drum operation member 13. However, the discharge side hose 47 is not connected to the drum operating member 13, so that the dispersion liquid 97 and the electrolytic solution are not retained therein.

Next, an operation of the electrolyzing device 1B will be explained hereunder. The operation of the electrolyzing device 1B is substantially the same as that of the electrolyzing device 1 shown in Fig. 1 except that the supplying process for supplying the dispersion liquid is not performed and the contents of the dispersion plating process are different. Therefore, only the dispersion plating process is explained hereunder and explanations of the other processes are omitted.

### (Dispersion Plating Process)

After the completion of the electrolytic solution agitating process, the dispersion plating process is then performed without carrying out the supplying process for supplying the dispersion liquid or the electrolytic solution. The dispersion plating process is performed so that the cylindrical rotary electrode 21A covered with the nonwoven fabric layer 31A is rolled on a surface of the alloy base member 80, and an electrolyzation at a constant current is performed by using a direct current power source 40, to thereby conduct the dispersion plating to the surface of the alloy base member 80.

In this connection, the electrolyzation is performed under the condition that the cylindrical rotary electrode 21A of the rotary electrode device 10B is used as a positive electrode while the alloy base member 80 is used as a negative electrode. In the dispersion plating operation, only the dispersion liquid 97 existing at a portion between the nonwoven fabric layer 31A of the rotary electrode device 10B and the alloy base member 80 is used as a supplying source of the A ion and the MCrAlY powder 94.

Due to the above dispersion plating, the composite coating layer 92 is formed on the surface of the alloy base member 80 to manufacture a coating-layer formed product 80A composed of the alloy base member 80 and the composite coating layer 92. The current density applied during the electrolyzing operation is the same as that of the case where the electrolyzing device 1 of the first embodiment is used for the electrolyzing operation.

According to the coating method using the electrolyzing device 1B, the movement of the rotary electrode device 10 is controlled by the robot arm 50 at the time of plating operation, the composite coating layer 92 having a uniform thickness and small amount of void can be formed onto the surface of the alloy base member 80.

Furthermore, according to the coating method using the electrolyzing device 1B, since it is not necessary to perforate holes (ejection holes) to the cylindrical rotary electrode 21A and the nonwoven fabric layer 31A, thus lowering a manufacturing cost of the rotary electrode device 10B.

In addition, according to the coating method using the electrolyzing device 1B, the MCrAlY powder 94 would not be clogged at portions such as inside of the hollow portion 27 of the rotary drum unit 11, and the first liquid ejection hole 25. Therefore, a maintenance property of the electrolyzing device 1B is further improved than that of the electrolyzing device 1 of the first embodiment as previously explained.

In the respective embodiments of the electrolyzing devices 1 to 1B, each of the rotary drum unit 11 and the rotary drum unit 11A are constituted by one cylindrical member extending in an axial direction. However, the rotary drum unit may be also formed by connecting a plurality of flat columnar members in an axial direction, each of the flat columnar members having a short length in the axial direction and having a axial bore. That is, a plurality of flat columnar members are arranged in an axial direction so that the axial directions of the flat columnar members are coincide with each other, and the axial bores of adjacent flat columnar members are connected by means of a flexible tube, not shown, such as rubber hose or the like.

According to the above structure, a follow-up property of the rotary drum unit onto the surface of the alloy base member 80 having a complicated surface shape is improved. Therefore, even in a case where it is required for the rotary drum unit 11 or the rotary drum unit 11A to change its tilt angle and roll on the alloy base member 80 at several times, the composite coating layer 92 having a uniform thickness can be formed only by rolling the rotary drum unit at a few rolling times.

### [Examples]

Hereunder, although more concrete Examples according to the present invention will be explained, the present invention should not be limited to the Examples.

### (Example 1)

A dispersion liquid 97 described later was stored in the electrolyzing bath 70 of the electrolyzing device 1 shown in Fig. 1, and the dispersion liquid 97 was then agitated by the agitator 75. In this condition, a rotor vane 80 of a turbine blade having a composition of 61wt%Ni-16Cr-8.5Co-1.7Mo-2.6W-balance other metal components and having a shape shown in Fig. 5 was immersed into the dispersion liquid 97.

Then, the electrolyzing operation was performed under the following conditions while the cylindrical rotary electrode 21 covered with the nonwoven fabric layer 31 was rolled onto the surface of the rotor vane 80 as the alloy base member: The electrolyzing operation was performed such that an electric quantity to be supplied to the surface of the rotor vane 80 is uniformly supplied to any portions of the rotor vane 80 by controlling a rolling state of the cylindrical rotary electrode 21 by means of the robot arm 50, thus forming the uniform composite coating layer 92.

With the thus formed composite coating layer 92, coating thickness and porosity were measured. The coating thickness was indicated as an average value, while the porosity was measured by a method described later.

Further, on the basis of the thus measured coating thickness and the porosity, an overall evaluation was conducted to the respective composite coating layers 92. The following evaluation criteria were adopted. Namely, in a case where the composite coating layer 92 formed in an electrolyzing time of 30 minutes had a thickness of 300 µ m or more and a porosity of 2.0 or less, the composite coating layer 92 was judged to be acceptable. On the other hand, the thickness and the porosity did not satisfy the above ranges, the composite coating layer 92 was judged to be not acceptable.

The above evaluation criteria were derived from acceptable criteria for the conventional coating layers. That is, when a CoCrAlY coating layer is deposited onto a Ni-based alloy at a thickness of about 300 µ m by a plasma spraying method and the CoCrAlY coating layer has a porosity of 2.0% or less, the CoCrAlY coating layer is generally judged to be acceptable. In this connection, in order to deposit the CoCrAlY coating layer having the thickness of about 300 µ m by the plasma spraying method, it takes a long time of about 60 minutes.

The results of the evaluation are shown in Table 2.

### (Dispersion Liquid)

As a dispersion liquid, a dispersion liquid prepared by dispersing a MCrAlY powder described later into an electrolytic solution described later at a mixing rate of 20g/l was used.

### (Electrolytic Solution)

Compositional condition and property of the electrolytic solution (sulfamic acid aqueous solution) are as follows.
- Ni(NH₂SO₃)₂·4H₂O:450g/l
- NiCl₂·6H₂O: 10g/l
- H₃BO₃: 40g/l
- H₃PO₃: 20g/l
- pH:1.4

### (MCrAlY Powder)

A composition of the MCrAlY powder is shown in Table 1. In the Table 1, the term "Bal." means balance component.

As a MCrAlY powder, a MCrAlY powder having an average grain size D50 of over 10 µ m and less than 15 µ m was used. A grain size distribution of the MCrAlY powder was measured by means of a laser-diffraction type grain size distribution measuring device (SALD-200A, manufactured by Shimazu Corporation). The average grain size D50 is defined as a grain size corresponding to an accumulated weight of 50%.

### (Electrolyzing Conditions)

Temperature of Dispersion Liquid: 50°C
Current Density: 20A/dm²
Electrolyzing Time: 30 minutes

### (Method of Measuring Porosity)

A photograph of a sectional area of the composite coating layer 92 was taken, and the porosity was defined as an area ratio (%) of a void area with respect to an entire sectional area of the composite coating layer observed in the photograph.

### [Examples 2 - 4 and Comparative Examples 1 - 9]

The same procedures as in Example 1 were repeated except that the average grain size of the MCrAlY powders were changed as indicated in Table 2 to form the respective composite coating layers 92 for the rotor vanes 80 of Examples 2 - 4 and Comparative Examples 1 - 9. Evaluation was made to the respective rotor vanes 80. The evaluation results are shown in Table 2.

### [Example 5]

The same procedures as in Example 1 were repeated except that the average grain size of the MCrAlIY powder was set to 20 µ m and the current density was changed to 10A/dm² to form a composite coating layer 92 for the rotor vane 80 of Example 5. Evaluation was made to the rotor vane 80. The evaluation result is shown in Table 3.

### [Examples 6 - 9 and Comparative Examples 10 - 17]

The same procedures as in Example 5 were repeated except that the current densities were changed as indicated in Table 3 to form the respective composite coating layers 92 for the rotor vanes 80 of Examples 6 - 9 and Comparative Examples 10 - 17. Evaluation was made to the respective rotor vanes 80. The evaluation results are shown in Table 3.

### [Example 10]

The same procedures as in Example 7 were repeated except that the mixing rate of the MCrAlY powder in the dispersion liquid was set to 10g/l to form a composite coating layer 92 for the rotor vane 80 of Example 10. Evaluation was made to the rotor vane 80. The evaluation result is shown in Table 4.

### [Examples 11 - 13 and Comparative Examples 18 - 25]

The same procedures as in Examples 10 were repeated except that the mixing rate of the MCrAlY powder in the dispersion liquid was set to values as indicated in Table 4 to form composite coating layers 92 for the rotor vanes 80 of Example 11 - 13 and Comparative Examples 18 - 25. Evaluations were made to the rotor vanes 80. The evaluation results are shown in Table 4.

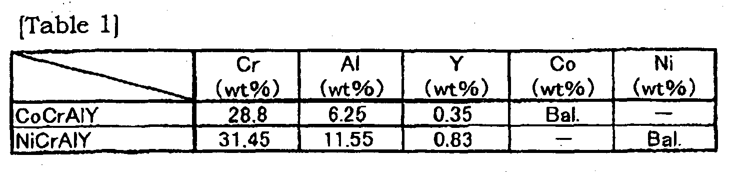

**[Table 2]**

| Sample No. | Powder Grain (µm) | Powder Mixing Rate (g/l) | Current Density (A/dm²) | Coating Thickness (µm) | Porosity (%) | Admission Decision of Composite Coating Layer |
|---|---|---|---|---|---|---|
| Comparative Example 1 | 1 µm over 5 µm or less | 20 | 20 | 20 | 0.1 | × |
| Comparative Example 2 | 5 µm over 10 µm or less | 20 | 20 | 70 | 0.3 | × |
| Example 1 | 10 µm over 15 µm or less | 20 | 20 | 300 | 0.8 | ○ |
| Example 2 | 15 µm over 20 µm m or less | 20 | 20 | 300 | 1.0 | ○ |
| Example 3 | 20 µm over 25 µm or less | 20 | 20 | 320 | 1.2 | ○ |
| Example 4 | 25 µm over | 20 | 20 | 330 | 1.6 | ○ |
| Comparative Example 3 | 30 µm over 36 µm m or less | 20 | 20 | 360 | 2.1 | × |
| Comparative Example 4 | 35 µm over 40 µm or less | 20 | 20 | 400 | 2.5 | × |
| Comparative Example 5 | 40 µm over 45 µm or less | 20 | 20 | 410 | 2.7 | × |
| Comparative Example 6 | 45 µm over 50 µm or less | 20 | 20 | 420 | 2.7 | × |
| Comparative Example 7 | 50 µm over 55 µm or less | 20 | 20 | 430 | 3.0 | × |
| Comparative Example 8 | 55 µm over 60 µm or loss | 20 | 20 | 460 | 4.4 | × |
| Comparative Example 9 | 60 µm over 65 µm or less | 20 | 20 | 470 | 4.8 | × |

**[Table 3]**

| Sample No. | Powder Grain Size (µm) | Powder Mixing Rate (s/l) | Current Density (A/dm²) | Coating Thickness (µm) | Porosity (%) | Admission Decision of Composite Coating Layed |
|---|---|---|---|---|---|---|
| Comparative Example 10 | 20 | 20 | 1 | 20 | 0.3 | × |
| Comparative Example 11 | 20 | 20 | 2 | 70 | 0.4 | × |
| Comparative Example 12 | 20 | 20 | 5 | 100 | 0.5 | × |
| Comparative Example 13 | 20 | 20 | 8 | 200 | 0.8 | × |
| Example 5 | 20 | 20 | 10 | 300 | 1.0 | ○ |
| Example 6 | 20 | 20 | 15 | 300 | 1.2 | ○ |
| Example 7 | 20 | 20 | 20 | 310 | 1.2 | ○ |
| Example 8 | 20 | 20 | 25 | 310 | 1.5 | ○ |
| Example 9 | 20 | 20 | 30 | 320 | 1.7 | ○ |
| Comparative Example 14 | 20 | 20 | 35 | 350 | 2.0 | × |
| Comparative Example 15 | 20 | 20 | 40 | 390 | 3.0 | × |
| Comparative Example 16 | 20 | 20 | 45 | 420 | 4.2 | × |
| Comparative Example 17 | 20 | 20 | 50 | 460 | 4.8 | × |

**[Table 4]**

| Sample No. | Powder Grain Size (µm) | Powder Mixing Rate (g/l) | Current Density (A/dm³) | Coating thickness (µm) | Porosity (%) | Admission Decision of Composite Coating Layer |
|---|---|---|---|---|---|---|
| Comparative Example 18 | 20 | 1 | 20 | 20 | 0.3 | × |
| Comparative Example 19 | 20 | 2 | 20 | 70 | 0.4 | × |
| Comparative Example 20 | 20 | 5 | 20 | 100 | 0.6 | × |
| Comparative Examples 21 | 20 | 8 | 20 | 200 | 0.6 | × |
| Example 10 | 20 | 10 | 20 | 300 | 1.0 | ○ |
| Example 11 | 20 | 15 | 20 | 300 | 1.2 | ○ |
| Example 7 | 20 | 20 | 20 | 310 | 1.2 | ○ |
| Example 12 | 20 | 25 | 20 | 310 | 1.5 | ○ |
| Example 13 | 20 | 30 | 20 | 320 | 1.7 | ○ |
| Comparative Examples 22 | 20 | 35 | 20 | 350 | 2.2 | × |
| Comparative Example 23 | 20 | 40 | 20 | 390 | 3.0 | × |
| Comparative Examples 24 | 20 | 45 | 20 | 420 | 4.2 | × |
| Comparative Example 25 | 20 | 50 | 20 | 460 | 4.0 | × |

It is explicitly stated that all features disclosed in the description and/or the claims are intended to be disclosed separately and independently from each other for the purpose of original disclosure as well as for the purpose of restricting the claimed invention independent of the compositions of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A coating method in which a composite coating layer is formed on a surface of an alloy base member (80) by utilizing an electrolyzing apparatus (1) provided with a rotary electrode device (10) which includes a cylindrical rotary electrode (21) capable of rolling on a surface of the alloy base member (80),
wherein the rotary electrode device (10) includes a rotary drum unit (11) including the cylindrical rotary electrode (21) and side members (22, 22) for closing both end portions in an axial direction of the cylindrical rotary electrode (21), a supporting member (12) for rotatably supporting the rotary drum unit (11), a drum operating member (13) connected to the supporting member (12), and a nonwoven fabric layer (31) covering the surface of the cylindrical rotary electrode (21),
wherein the rotary drum unit (11) is formed with a hollow portion (27) therein, the cylindrical rotary electrode (21) is provided with a plurality of first liquid ejection holes (25) that communicated with the hollow portion (27), and each of the supporting member (12) and the drum operating member (13) is formed with hollow portions (28) that are connected to each other, and
wherein the nonwoven fabric layer (31) is provided with a plurality of second ejection holes (35), which are formed so as to overlap with the first liquid ejection holes (25) at a wide range thereof,
the coating method comprising the steps of
preparing an electrolytic solution containing A ions wherein A is Co or Ni;
preparing a MCrAlY powder wherein M denotes at least one element selected from the group consisting of Ni and Co, and the MCrAlY powder contains at least Ni when A is Co or the MCrAlY powder contains at least Co when A is Ni;
preparing a dispersion liquid (97) by dispersing the MCrAlY powder into the electrolytic solution;
immerging the cylindrical rotary electrode (21) and the alloy base member (80) into the dispersion liquid (97);and
electrolyzing the surface of the alloy base member (80) while rolling the cylindrical rotary electrode (21) covered with the nonwoven fabric layer (31) on the surface of the alloy base member (80) to thereby form a composite coating layer on the surface of the alloy base member (80).

2. The coating method according to claim 1, wherein the composite coating layer comprises a matrix phase composed of A and the MCrAlY powder dispersed in the matrix phase.

3. The coating method according to claim 1 or 2, wherein the MCrAlY powder contained in the dispersion liquid (97) has a grain size of more than 10 µm and 30 µm or less.

4. The coating method according to any one of claims 1 to 3, wherein the dispersion liquid (97) contains the MCrAlY powder at a mixing rate of 10g/l to 30g/l.

5. The coating method according any one of claims 1 to 4, wherein the current density at the time of electrolyzing is set to 10A/dm² to 30A/dm²,

6. The coating method according to any one of claims 1 to 5, wherein the dispersion liquid (97) has a temperature set to 40°C to 60°C at the time of electrolyzing.

7. The coating method according to any one of claims 1 to 6, wherein the electrolytic solution of the dispersion liquid (97) is a nickel sulfamate aqueous solution, and the MCrAlY powder is CoCrAlY powder.

8. The coating method according to any one of claims 1 to 6, wherein the electrolytic solution of the dispersion liquid (97) is a cobalt sulfamate aqueous solution, and the MCrAlY powder is NiCrAlY powder.

9. The coating method according to any one of claims 1 to 8, wherein the alloy base mem- , ber (80) is composed of a super alloy containing at least one element selected from a group consisting ofNi, Cr and Fe as main component.

10. The coating method according any one of claims 1 to 9, further comprising the step of heating the alloy base member (80) and the composite coating layer at a temperature of 800°C to 1200°C for 60 - 300 minutes.

11. The coating method according to any one of claims 1 to 10, wherein the alloy base member (80) is a part for a gas turbine.

12. The coating method according to claim 11, wherein the gas turbine part is a turbine blade.

13. An electrolyzing apparatus (1) used for a coating method of any one of claims 1 to 12, comprising: an electrolytic bath (70) filled with dispersion liquid (97); a rotary electrode device (10) in which a rotary drum unit (11) having a cylindrical rotary electrode (21) is immerged into the dispersion liquid (97); a robot arm (50) having a top end portion (57) attached to the rotary drum unit (11); a control unit (60) for controlling a movement of the robot arm (50); a dispersion liquid supply pump (45) connected to the rotary electrode device (10) so as to eject the dispersion liquid (97) from the rotary drum unit (11); and an agitator (75) for agitating the dispersion liquid (97),
wherein the rotary electrode device (10) includes a rotary drum unit (11) including the cylindrical rotary electrode (21) and side members (22, 22) for closing both end portions in an axial direction of the cylindrical rotary electrode (21), a supporting member (12) for rotatably supporting the rotary drum unit (11), a drum operating member (13) connected to the supporting member (12), and a nonwoven fabric layer (31) covering the surface of the cylindrical rotary electrode (21),
wherein the rotary drum unit (11) is formed with a hollow portion (27) therein, the cylindrical rotary electrode (21) is provided with a plurality of first liquid ejection holes (25) that communicate with the hollow portion (27), and each of the supporting member (12) and the drum operating member (13) is formed with hollow portions (28) that are connected to each other, and
wherein the nonwoven fabric layer (31) is provided with a plurality of second ejection holes (35), which are formed so as to overlap with the first liquid ejection holes (25) at a wide range thereof.

## Patentansprüche

1. Beschichtungsverfahren, bei dem eine Verbundbeschichtungsschicht auf einer Oberfläche eines Legierungsbasiselements (80) unter Verwendung einer Elektrolysevorrichtung (1) gebildet wird, die mit einer Rotationselektrodenvorrichtung (10) ausgestattet ist, die eine zylindrische Rotationselektrode (21) umfasst, die auf einer Oberfläche des Legierungsbasiselements (80) rollen kann,
wobei die Rotationselektrodenvorrichtung (10) eine Rotationstrommeleinheit (11), welche die zylindrische Rotationselektrode (21) und Seitenelemente (22, 22) zum Schließen von beiden Endabschnitten in einer axialen Richtung der zylindrischen Rotationselektrode (21) umfasst, ein Stützelement (12) zum drehbaren Stützen der Rotationstrommeleinheit (11), ein Trommelbetätigungselement (13), das mit dem Stützelement (12) verbunden ist, und eine Vliesschicht (31), welche die Oberfläche der zylindrischen Rotationselektrode (21) bedeckt, umfasst,
wobei die Rotationstrommeleinheit (11) mit einem hohlen Abschnitt (27) darin ausgebildet ist, die zylindrische Rotationselektrode (21) mit einer Mehrzahl von ersten Flüssigkeitsausstoßlöchern (25) ausgestattet ist, die mit dem hohlen Abschnitt (27) in Verbindung stehen, und das Stützelement (12) und das Trommelbetätigungselement (13) jeweils mit hohlen Abschnitten (28) ausgebildet sind, die miteinander verbunden sind, und
wobei die Vliesschicht (31) mit einer Mehrzahl von zweiten Ausstoßlöchern (35) ausgestattet ist, die so ausgebildet sind, dass sie mit den ersten Flüssigkeitsausstoßlöchern (25) in einem breiten Bereich davon überlappen,
wobei das Beschichtungsverfahren die Schritte umfasst:
Herstellen einer Elektrolytlösung, die A-lonen enthält, wobei A Co oder Ni ist,
Herstellen eines MCrAlY-Pulvers, wobei M für mindestens ein Element steht, das aus der Gruppe, bestehend aus Ni und Co, ausgewählt ist, und das MCrAlY-Pulver mindestens Ni enthält, wenn A Co ist, oder das MCrAlY-Pulver mindestens Co enthält, wenn A Ni ist,
Herstellen einer Dispersionsflüssigkeit (97) durch Dispergieren des MCrAlY-Pulvers in der Elektrolytlösung,
Eintauchen der zylindrischen Rotationselektrode (21) und des Legierungsbasiselements (80) in die Dispersionsflüssigkeit (97) und
Elektrolysieren der Oberfläche des Legierungsbasiselements (80), während die zylindrische Rotationselektrode (21), die mit der Vliesschicht (31) bedeckt ist, auf der Oberfläche des Legierungsbasiselements (80) gerollt wird, so dass dadurch eine Verbundbeschichtungsschicht auf der Oberfläche des Legierungsbasiselements (80) gebildet wird.

2. Beschichtungsverfahren nach Anspruch 1, bei dem die Verbundbeschichtungsschicht eine Matrixphase, die aus A zusammengesetzt ist, und das MCrAlY-Pulver, das in der Matrixphase dispergiert ist, umfasst.

3. Beschichtungsverfahren nach Anspruch 1 oder 2, bei dem das in der Dispersionsflüssigkeit (97) enthaltene MCrAlY-Pulver eine Korngröße von mehr als 10 µm und 30 µm oder weniger aufweist.

4. Beschichtungsverfahren nach einem der Ansprüche 1 bis 3, bei dem die Dispersionsflüssigkeit (97) das MCrAlY-Pulver in einem Mischanteil von 10 g/Liter bis 30 g/Liter enthält.

5. Beschichtungsverfahren nach einem der Ansprüche 1 bis 4, bei dem die Stromdichte zum Zeitpunkt des Elektrolysierens auf 10 A/dm² bis 30 A/dm² eingestellt ist.

6. Beschichtungsverfahren nach einem der Ansprüche 1 bis 5, bei dem die Dispersionsflüssigkeit (97) zum Zeitpunkt des Elektrolysierens eine Temperatur aufweist, die auf 40 °C bis 60 °C eingestellt ist.

7. Beschichtungsverfahren nach einem der Ansprüche 1 bis 6, bei dem die Elektrolytlösung der Dispersionsflüssigkeit (97) eine wässrige Nickelsulfamatlösung ist und das MCrAlY-Pulver ein CoCrAlY-Pulver ist.

8. Beschichtungsverfahren nach einem der Ansprüche 1 bis 6, bei dem die Elektrolytlösung der Dispersionsflüssigkeit (97) eine wässrige Kobaltsulfamatlösung ist und das MCrAlY-Pulver ein NiCrAlY-Pulver ist.

9. Beschichtungsverfahren nach einem der Ansprüche 1 bis 8, bei dem das Legierungsbasiselement (80) aus einer Superlegierung zusammengesetzt ist, die mindestens ein Element, das aus einer Gruppe, bestehend aus Ni, Cr und Fe, ausgewählt ist, als Hauptkomponente enthält.

10. Beschichtungsverfahren nach einem der Ansprüche 1 bis 9, das ferner den Schritt des Erwärmens des Legierungsbasiselements (80) und der Verbundbeschichtungsschicht bei einer Temperatur von 800 °C bis 1200 °C für 60 bis 300 Minuten umfasst.

11. Beschichtungsverfahren nach einem der Ansprüche 1 bis 10, bei dem das Legierungsbasiselement (80) ein Bauteil für eine Gasturbine ist.

12. Beschichtungsverfahren nach Anspruch 11, bei dem das Gasturbinenbauteil eine Turbinenschaufel ist.

13. Elektrolysiervorrichtung (1), die für ein Beschichtungsverfahren nach einem der Ansprüche 1 bis 12 eingesetzt wird, umfassend: ein Elektrolytbad (70), das mit Dispersionsflüssigkeit (97) gefüllt ist, eine Rotationselektrodenvorrichtung (10), in der eine Rotationstrommeleinheit (11), die eine zylindrische Rotationselektrode (21) aufweist, in die Dispersionsflüssigkeit (97) eingetaucht ist, einen Roboterarm (50), der einen oberen Endabschnitt (57) aufweist, der an der Rotationstrommeleinheit (11) angebracht ist, eine Steuerungseinheit (60) zum Steuern einer Bewegung des Roboterarms (50), eine Dispersionsflüssigkeit-Zuführungspumpe (45), die so mit der Rotationselektrodenvorrichtung (10) verbunden ist, dass sie die Dispersionsflüssigkeit (97) aus der Rotationstrommeleinheit (11) ausstößt, und eine Bewegungsvorrichtung (75) zum Bewegen der Dispersionsflüssigkeit (97),
wobei die Rotationselektrodenvorrichtung (10) eine Rotationstrommeleinheit (11), welche die zylindrische Rotationselektrode (21) und Seitenelemente (22, 22) zum Schließen von beiden Endabschnitten in einer axialen Richtung der zylindrischen Rotationselektrode (21) umfasst, ein Stützelement (12) zum drehbaren Stützen der Rotationstrommeleinheit (11), ein Trommelbetätigungselement (13), das mit dem Stützelement (12) verbunden ist, und eine Vliesschicht (31), welche die Oberfläche der zylindrischen Rotationselektrode (21) bedeckt, umfasst,
wobei die Rotationstrommeleinheit (11) mit einem hohlen Abschnitt (27) darin ausgebildet ist, die zylindrische Rotationselektrode (21) mit einer Mehrzahl von ersten Flüssigkeitsausstoßlöchern (25) ausgestattet ist, die mit dem hohlen Abschnitt (27) in Verbindung stehen, und das Stützelement (12) und das Trommelbetätigungselement (13) jeweils mit hohlen Abschnitten (28) ausgebildet sind, die miteinander verbunden sind, und
wobei die Vliesschicht (31) mit einer Mehrzahl von zweiten Ausstoßlöchern (35) ausgestattet ist, die so ausgebildet sind, dass sie mit den ersten Flüssigkeitsausstoßlöchern (25) in einem breiten Bereich davon überlappen.

## Revendications

1. Procédé de revêtement dans lequel une couche de revêtement composite est formée sur une surface d'un élément de base en alliage (80) en utilisant un appareil d'électrolyse (1) muni d'un dispositif à électrode rotative (10) qui comprend une électrode rotative cylindrique (21) capable de rouler sur une surface de l'élément de base en alliage (80),
dans lequel le dispositif à électrode rotative (10) comprend une unité de tambour rotative (11) comprenant l'électrode cylindrique rotative (21) et des éléments latéraux (22, 22) pour fermer les deux portions d'extrémité dans une direction axiale de l'électrode cylindrique rotative (21), un élément de support (12) pour supporter à rotation l'unité de tambour rotative (11), un élément (13) actionnant le tambour raccordé à l'élément de support (12), et une couche de tissu non tissé (31) recouvrant la surface de l'électrode cylindrique rotative (21),
dans lequel l'unité de tambour rotative (11) est formée avec une portion creuse (27), l'électrode cylindrique rotative (21) est munie d'une pluralité de premiers trous d'éjection de liquide (25) qui communiquent avec la portion creuse (27), et chacun de l'élément de support (12) et de l'élément (13) actionnant le tambour est formé avec des portions creuses (28) qui sont raccordées l'une à l'autre, et
dans lequel la couche de tissu non tissé (31) est munie d'une pluralité de seconds trous d'éjection (35), qui sont formés pour chevaucher les premiers trous d'éjection de liquide (25) sur une large extension de ceux-ci,
le procédé de revêtement comprenant les étapes consistant à :
préparer une solution électrolytique contenant des ions A, dans laquelle A représente Co ou Ni ;
préparer une poudre de MCrAlY, dans laquelle M représente au moins un élément sélectionné dans le groupe constitué de Ni et de Co et la poudre de MCrAlY contient au moins du Ni lorsque A représente Co ou la poudre de MCrAlY contient au moins du Co lorsque A représente Ni ;
préparer un liquide de dispersion (97) en dispersant la poudre de MCrAlY dans la solution électrolytique ;
immerger l'électrode cylindrique rotative (21) et l'élément de base en alliage (80) dans le liquide de dispersion (97) ; et
soumettre la surface de l'élément de base en alliage (80) à une électrolyse tout en faisant tourner l'électrode cylindrique rotative (21) recouverte de la couche de tissu non tissé (31) sur la surface de l'élément de base en alliage (80) pour former ainsi une couche de revêtement composite sur la surface de l'élément de base en alliage (80).

2. Procédé de revêtement selon la revendication 1, dans lequel la couche de revêtement comprend une phase matricielle composée de A et de la poudre de MCrAlY dispersée dans la phase matricielle.

3. Procédé de revêtement selon la revendication 1 ou 2, dans lequel la poudre de MCrAlY contenue dans le liquide de dispersion (97) a un calibre granulaire de plus de 10 µm et de 30 µm ou moins.

4. Procédé de revêtement selon l'une quelconque des revendications 1 à 3, dans lequel le liquide de dispersion (97) contient la poudre de MCrAlY dans un rapport de mélange de 10 g/l à 30 g/l.

5. Procédé de revêtement selon l'une quelconque des revendications 1 à 4, dans lequel la densité de courant au moment de l'électrolyse est réglée à une valeur de 10 A/dm² à 30 A/dm².

6. Procédé de revêtement selon l'une quelconque des revendications 1 à 5, dans lequel le liquide de dispersion (97) a une température réglée dans une plage de 40 °C à 60 °C au moment de l'électrolyse.

7. Procédé de revêtement selon l'une quelconque des revendications 1 à 6, dans lequel la solution électrolytique du liquide de dispersion (97) est une solution aqueuse de sulfamate de nickel et la poudre de MCrAlY est une poudre de CoCrAlY.

8. Procédé de revêtement selon l'une quelconque des revendications 1 à 6, dans lequel la solution électrolytique du liquide de dispersion (97) est une solution aqueuse de sulfamate de cobalt et la poudre de MCrAlY est une poudre de NiCrAlY.

9. Procédé de revêtement selon l'une quelconque des revendications 1 à 8, dans lequel l'élément de base en alliage (80) est composé d'un super alliage contenant au moins un élément sélectionné dans un groupe constitué de Ni, Cr et Fe comme composant principal.

10. Procédé de revêtement selon l'une quelconque des revendications 1 à 9, comprenant en outre l'étape de chauffage de l'élément de base en alliage (80) et de la couche de revêtement composite à une température de 800 °C à 1200 °C pendant 60 à 300 minutes.

11. Procédé de revêtement selon l'une quelconque des revendications 1 à 10, dans lequel l'élément de base en alliage (80) est une pièce de turbine à gaz.

12. Procédé de revêtement selon la revendication 11, dans lequel la pièce de turbine à gaz est une aube de turbine.

13. Appareil d'électrolyse (1) utilisé pour un procédé de revêtement selon l'une quelconque des revendications 1 à 12, comprenant : un bain électrolytique (70) rempli de liquide de dispersion (97) ; un dispositif à électrode rotative (10) dans lequel une unité de tambour rotative (11) ayant une électrode cylindrique rotative (21) est immergée dans le liquide de dispersion (97) ; un bras de robot (50) ayant une portion d'extrémité supérieure (57) fixée à l'unité de tambour rotative (11) ; une unité de commande (60) pour commander un mouvement du bras de robot (50) ; une pompe d'alimentation en liquide de dispersion (45) raccordée au dispositif à électrode rotative (10) afin d'éjecter le liquide de dispersion (97) de l'unité de tambour rotative (11) ; et un agitateur (75) pour agiter le liquide de dispersion (97),
dans lequel le dispositif à électrode rotative (10) comprend une unité de tambour rotative (11) comprenant l'électrode cylindrique rotative (21) et des éléments latéraux (22, 22) pour fermer les deux portions d'extrémité dans une direction axiale de l'électrode cylindrique rotative (21), un élément de support (12) pour supporter à rotation l'unité de tambour rotative (11), un élément (13) actionnant le tambour raccordé à l'élément de support (12), et une couche de tissu non tissé (31) recouvrant la surface de l'électrode cylindrique rotative (21),
dans lequel l'unité de tambour rotative (11) est formée avec une portion creuse (27), l'électrode cylindrique rotative (21) est munie d'une pluralité de premiers trous d'éjection de liquide (25) qui communiquent avec la portion creuse (27), et chacun de l'élément de support (12) et de l'élément (13) actionnant le tambour est formé avec des portions creuses (28) qui sont raccordées l'une à l'autre, et
dans lequel la couche de tissu non tissé (31) est munie d'une pluralité de seconds trous d'éjection (35), qui sont formés de manière à chevaucher les premiers trous d'éjection de liquide (25) sur une large extension de ceux-ci.
